# EUROPÄISCHE PATENTSCHRIFT

(11) **EP 0 944 997 B1**
(45) Veröffentlichungstag und Bekanntmachung des Hinweises auf die Patenterteilung: **13.11.2002**
(21) Anmeldenummer: 97952933.6
(22) Anmeldetag: 12.12.1997
(51) Int. Cl.: H04N 1/00

(54) **VERFAHREN ZUR ARCHIVIERUNG VON BILDVORLAGEN MITTELS DIGITALER BILDDATENVERARBEITUNG**
METHOD FOR ARCHIVING MASTER IMAGES BY DIGITAL IMAGE DATA PROCESSING
PROCEDE D'ARCHIVAGE DE MODELES D'IMAGE AU MOYEN D'UN TRAITEMENT NUMERIQUE DE DONNEES D'IMAGE

(30) Priorität: 13.12.1996 DE 19653671; 13.12.1996 DE 19653742; 13.12.1996 DE 19653740
(43) Veröffentlichungstag der Anmeldung: 29.09.1999
(73) Patentinhaber: Deutsches Zentrum für Luft- und Raumfahrt e.V., 51147 Köln (DE)
(72) Erfinder: HILBERT, Stefan, D-15738 Zeuthen (DE); REULKE, Ralf, D-15745 Wildau (DE); DRIESCHER, Hans, D-12559 Berlin (DE); ECKARDT, Andreas, D-12689 Berlin (DE); SCHEELE, Martin, D-14656 Brieselang (DE); SCHUSTER, Reinhard, D-14532 Kleinmachnow (DE); TERZIBASCHIAN, Thomas, D-13088 Berlin (DE)
(74) Vertreter: Zucker, Volker, Dipl.-Ing.
(86) Internationale Anmeldenummer: EP9706977
(87) Internationale Veröffentlichungsnummer: WO98026579

(56) Entgegenhaltungen:
- WO-A-95/28052
- GB-A- 2 286 941
- US-A- 5 311 326
- US-A- 5 461 491
- PATENT ABSTRACTS OF JAPAN vol. 012, no. 385 (E-668), 14.Oktober 1988 & JP 63 127667 A (SHARP CORP), 31.Mai 1988,

## Beschreibung

Die Erfindung betrifft ein Verfahren zur Archivierung von Bildvorlagen, insbesondere von Filmen, bei dem die Bildvorlage abgetastet wird, die erfaßten Bildpunkte digitalisiert, korrigiert und komprimiert werden, sowie eine Vorrichtung zur Durchführung des Verfahrens.

Aufgrund der endlichen Haltbarkeitsdauer von Zelluloid-Filmen und deren aufwendiger Lagerung besteht seit langem ein Bedürfnis, die Bildinformationen einfach und dauerhaft zu archivieren. So sind auch vielfältige Anstrengungen unternommen worden, die Bildvorlagen auf anderen Medien zu speichern.

Aus der Nachrichten- und Informationstechnik sind die theoretischen Voraussetzungen einer verlustfreien Digitalisierung seit langem bekannt. Dazu ist es erforderlich, daß das Abtasttheorem von Shannon eingehalten wird, das besagt, daß mit einer mindestens zweifachhöheren Abtastfrequenz als die höchste vorkommene Signalfrequenz abgetastet werden muß, um einen Informationsverlust zu vermeiden. Ähnliche Überlegungen gelten auch für die Digitalisierung von Bildvorlagen (Jähne, Bernd: Digitale Bildverarbeitung, zweite Aufl. 1991, Springer Verlag Berlin, Seite 41-49). Die Einhaltung des Abtasttheorems stellt für die Nachrichten- und Informationstechnik kein wesentliches Problem dar, da die Bandbreite des Nutzsignals vorab festgelegt ist. Bei Bildvorlagen ist die Auflösung jedoch meist nicht vorbekannt, so daß die Einhaltung des Abtasttheorems erhebliche praktische Schwierigkeiten bereitet. Wird hingegen einfach mit der technisch . maximal möglichen Auflösung die Bildvorlage abgetastet, so ist der Datenanfall derart groß, daß einerseits die Digitalisierung eine unvorstellbare Zeit beansprucht und andererseits der benötigte Speicherplatz ins Unermeßliche steigt. Daher spielt das Abtasttheorem bezüglich Bildvorlagen im weitesten Sinne nur dann eine Rolle, falls a priori Informationen über die Bildvorlage vorhanden sind.

Bezüglich der Probleme aufgrund der anfallenden Datenmengen wird beispielsweise auf die WO 92/22 141 verwiesen, aus der eine Vorrichtung zur Datenkompression bekannt ist, die hierarchieförmig aufgebaut ist. Dabei werden eine Vielzahl von Mikroprozessoren in unterschiedlichen Ebenen angeordnet, wobei jeweils der Mikroprozessor der höheren Ebene nur noch einen Teil der zu komprimierenden Daten übergibt, so daß insbesondere sich von Bildvorlage zu Bildvorlage nur wenig ändernde Datensätze schnell verarbeitet werden können. Nachteilig an der bekannten Vorrichtung ist neben der Ünmöglichkeit einer verlustfreien Archivierung der sehr aufwendige Aufbau und die geringe Verarbeitungsgeschwindigkeit von sich schnell ändernden Bildvorlagen.

Aus der JP 5-63912 A ist eine Vorrichtung zur Digitalisierung von Schriftvorlagen bekannt, bei der eine Digitalisierung mit einer bestimmten Abtastrate vorgenommen wird. Anhand des binären Aufbaus der Schriftvorlage kann dann verhältnismäßig einfach auf Aliasing-Effekte aufgrund der Unterabtastung zurückgeschlossen werden und die Auflösung solange erhöht werden, bis die Aliasing-Effekte verschwunden sind. Bei komplexeren Bildvorlagen ohne a priori Kenntnisse ist ein solches Vorgehen ausgeschlossen, da die Aliasing-Effekte nicht zuverlässig erfaßbar sind.

Daher ist man in der Praxis bezüglich Filmvorlagen einen anderen technischen Weg gegangen, nämlich eine optimierte Anpassung an das Wiedergabemedium unter Inkaufnahme eines Datenverlustes.

Aus der EP 0 440 230 ist beispielsweise eine Vorrichtung bekannt, mit der die Bildinformationen eines Kinofilms in ein Videosignal für das Fernsehen umgesetzt werden. Dabei werden auch mechanische Fehler der Bildvorlage übernommen. Nachträglich werden dann beim Abspielen bestimmte Fehler erkannt und unterdrückt. Derartige Verfahren sind beispielsweise aus der DE 33 11 898 oder der DE 44 09 283 bekannt. Nachteilig an dieser und ähnlichen Vorgehensweisen ist, daß die Umsetzung auf das zukünftige Medium Fernsehen zugeschnitten ist, so daß Bildinformationen der Bildvorlage bei der Umsetzung verloren gehen. Bei anschließender Vernichtung der Bildvorlage sind diese Fehler kaum oder gar nicht mehr zu rekonstruieren, so daß die ursprüngliche Bildvorlage nicht mehr aus den Archivdaten vollständig erzeugt werden kann.

Aus der WO 95/28052 ist ein Verfahren und eine Vorrichtung zur Archivierung von Bildvorlagen bekannt, bei dem die Bildvorlage mittels einer optischen Vorrichtung mit photosensitiven Bauelementen abgetastet wird und die erfaßten Bildpunkte digitalisiert, komprimiert und abgespeichert werden. Das bekannte Verfahren geht von einer a priori Information der geometrischen Auflösung der Bildvorlage aus. Anschließend wird die Originalvorlage auf einem Film abgebildet, wobei eine konstante Verkleinerung durch die Optik erfolgt. Anschließend erfolgt eine um einen bestimmten Faktor angepaßte Projektion auf die CCD-Bauelemente, so daß die Auflösung der CCD-Bauelemente voll ausgenutzt wird.

Aus den Patent Abstracts of Japan vol. 012, no. 385 (E-668), JP 63 127667 A ist eine Fax-Einrichtung zur elektronischen Übertragung einer Bildvorlage bekannt, wobei zunächst mittels eines Detektors die geometrische Auflösung der Bildvorlage bestimmt wird. Daraus wird eine maximale Scan- und Bildvorlagegeschwindigkeit bestimmt, mit der sich ein Einzeldetektor quer über die sich mit der Bildvorlagegeschwindigkeit bewegende Bildvorlage bewegt, so daß eine an die Auflösung der Bildvorlage angepaßte Digitalisierung erfolgt. Zur Archivierung der Bildvorlagen, insbesondere von Filmen, ist jedoch die Vorrichtung nicht geeignet, da diese zum einen zu langsam ist und zweitens die unterschiedlichen Geschwindigkeiten bei unterschiedlichen Auflösungen zu Problemen beim Filmtransport führen könnten.

Der Erfindung liegt daher das technische Problem zugrunde, ein Verfahren und eine Vorrichtung zur Durchführung des Verfahrens zu schaffen, um Bildvorlagen, insbesondere von Filmen, verlustfrei zu archivieren.

Die Lösung des technischen Problems ergibt sich durch die Gegenstände mit den Merkmalen der Patentansprüche 1 und 13. Weitere vorteilhafte Ausgestaltungen ergeben sich aus den Unteransprüchen.

Hierzu wird vorab die geometrische und radiometrische Auflösung der jeweiligen Bildvorlage vorab bestimmt oder erfaßt und anschließend die Auflösung der Vorrichtung adaptiv an die vorab bestimmte oder erfaßte geometrische und radiometrische Auflösung der Bildvorlage derart angepaßt, daß diese mit maximaler Auflösung das jeweiligen Abtasttheorem einhält, wobei die adaptive Anpassung der geometrischen Auflösung der optischen Vorrichtung durch Makropixelbildung des photosensitiven Bauelementes vorgenommen wird.

in einer weiteren bevorzugten Ausführungsform wird zusätzlich zur Anpassung der geometrischen Auflösung eine Defokussierung vorgenommen.

In einer weiteren bevorzugten Ausführungsform wird zur Vorabbestimmung der maximalen geometrischen Auflösung der Bildvorlage die Autokorrelationsfunktion der Grauwerte und/oder die spektrale Verteilung mit Grenzwertbestimmung der Raumfrequenz erfaßt.

In einer weiteren bevorzugten Ausführungsform wird die adaptive Anpassung der radiometrischen Auflösung der optischen Vorrichtung durch die Verstärkung des photosensitiven Bauelementes und/oder die Integrationszeit und/oder die Bestrahlungsstärke vorgenommen.

In einer bevorzugten Ausführungsform wird die spektrale Auflösung der jeweiligen Bildvorlage vorab bestimmt oder erfaßt und anschließend die Auflösung der optischen Vorrichtung adaptiv an die vorabbestimmte oder erfaßte Auflösung der Bildvorlage derart angepaßt, daß diese jeweils mit minimaler Auflösung das Abtasttheorem einhält.

In einer weiteren bevorzugten Ausführungsform wird die adaptive Anpassung der spektralen Auflösung der optischen Vorrichtung durch die Verstellung der spektralen Empfindlichkeit des photosensitiven Bauelementes und/oder eine Änderung der spektralen Beleuchtungsstärke der Strahlungsquelle vorgenommen.

Vorteilhafterweise wird das photosensitive Bauelement vermessen und Korrekturwerte ermittelt, mittels denen z. B. Inhomogenitäten der Strahlungsquelle, der Randabfall von Abbildungsoptiken, sowie Empfindlichkeitsschwankungen des photosensitiven Bauelementes selbst korrigiert werden können.

Um die anfallenden Datenmengen weiter zu reduzieren, werden vor der Datenkomprimierung mechanische Fehler und/oder andere Fehlstellen der Bildvorlage erfaßt und mittels benachbarter Bildpunkte und/oder vorangegangener und/ oder nachfolgender Bildvorlagen korrigiert oder ignoriert. Beispielsweise kann eine lokale Abweichunge der Point-Spread-Funktion gegenüber der übrigen Bildvorlage für eine Kantenerkennung der mechanischen Fehler der Bildvor-lage und/oder der Tonspur einer Filmvorlage benutzt werden, wobei Aliasing-Effekte auszuschließen sind. Die PSF der übrigen Bildvorlage wird dabei z.B. vorab auf Basis der bekannten Aufzeichnungstechnik und des Materials der Bildvorlage ermittelt. Befindet sich beispielsweise ein Riß in einer Bildvorlage einer Filmsequenz, so würden die bekannten Verfahren dies als starke Änderung von Bildvorlage zu Bildvorlage auffassen und entsprechend große Datenmengen abspeichern. Beim erfindungsgemäßen Verfahren hingegen wird dieser Fehler detektiert und gegebenenfalls korrigiert oder ignoriert. Risse und Knicke müssen nicht zwangsläufig zu einem Fehlen von Bildinformationen führen, sondern sich als zusätzlicher Strich darstellen, der nur zu ignorieren ist. Zur Korrektur von Fehlstellen sind verschiedene Verfahren denkbar, die gegebenenfalls auch in Kombination Anwendung finden können. Zum einen kann durch geeignete Signalverarbeitungsalgorithmen aus der Umgebung der Fehlstelle auf den fehlenden Bildinhalt geschlossen werden, indem der gesamte Inhalt eines Bildes und alle jeweils zur Fehlstelle benachbarten Bildpunkte analysiert werden. Zum anderen kann durch Vergleich mit vorausgegangenen und nachfolgenden Bildvorlagen auf den fehlenden Bildinhalt zurückgeschlossen werden, da das Auftreten von bestimmten Fehlstellen, beispielsweise aufgrund des Einflusses von Mikroorganismen, mit gleicher Geometrie in aufeinander-folgenden Bildvorlagen sehr unwahrscheinlich ist. Bei Bildfolgen mit schnell wechselndem Bildinhalt müssen zusätzlich sogenannte Bewegungsvektoren ermittelt werden, um dieses Korrekturverfahren durchzuführen.

Weiter kann vorgesehen sein, daß die erfaßten Bildpunkte mittels Korrekturkurven spektral und radiometrisch nachgeführt werden, wobei die Korrekturkurven insbesondere Materialparameter und Alterungsprozesse der Bildvorlage kompensieren. Des weiteren können Unschärfen der Bildvorlage durch eine Korrektur der Point-Spread-Funktion behoben werden. Dies hat den Vorteil, daß die Qualität der Bildvorlage wieder in ihren ursprünglichen Zustand überführt wird, so daß spätere aufwendige Rekonstruktionen überflüssig werden. Weiter kann sogar die Bildqualität gegenüber der Bildvorlage verbessert werden, indem durch die Korrektur der PSF Unschärfen des Originals korrigierbar sind, was beispielsweise durch Kenntnis des Kameraaufbaus, des verwendeten Objektivs und/oder Filters bei der Originalaufnahme der Bildvorlage möglich ist.

Die Erfindung wird nachfolgend anhand eines bevorzugten Ausführungsbeispiels näher erläutert. Die Figuren zeigen:

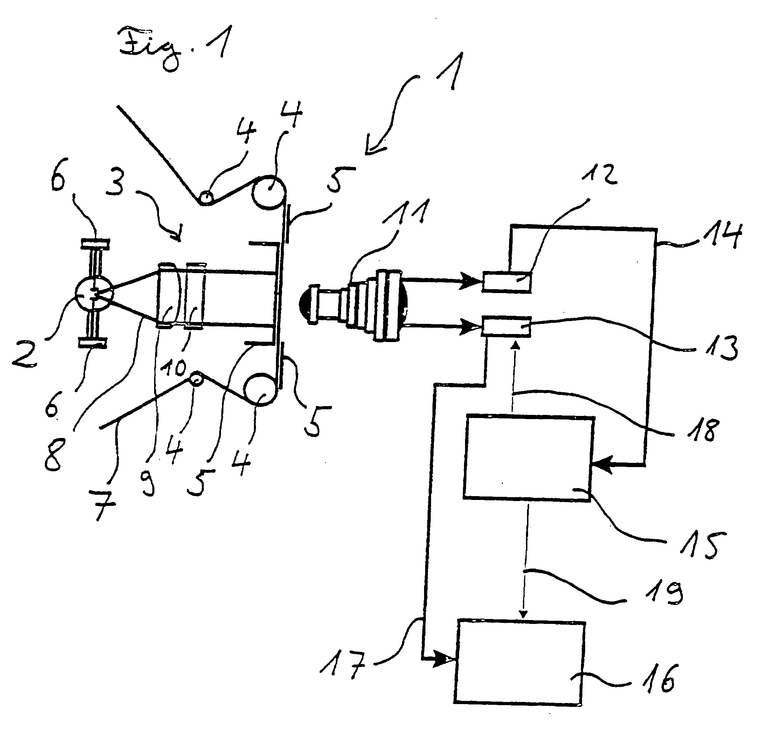

- Fig. 1:: eine schematische Darstellung der Vorrichtung zum geometrischen und radiometrischen Abtasten einer Bildvorlage,
- Fig.2:: eine schematische Darstellung der aufgenommenen und geänderten radiometrischen Verteilung der Bildvorlage und
- Fig.3:: ein Blockschaltbild einer Vorrichtung zur Korrektur mechanischer Fehler und/oder anderer Fehlstellen der Bildvorlage.

Die Vorrichtung 1 umfaßt eine Lichtquelle 2, eine Abbildungsoptik 3, mehrere Transportrollen 4 und Führungen 5. Die Lichtquelle 2 ist in ihrer Strahlungsleistung veränderbar und über Befestigungsmittel 6 ortsfest anordbar. Über die Transportrollen 4 wird ein Film 7 kontinuierlich oder diskontinuierlich bewegt. Dabei wird die von der Lichtquelle 2 ausgesandte Strahlung 8 über die Abbildungsoptik 3 auf eine ausgewählte Bildvorlage des Films 7 abgebildet, wobei mindestens ein Teil der der Lichtquelle zugewandten Führung lichtdurchlässig ausgebildet ist. Die Abbildungsoptik 3 umfaßt eine Linse 9 und einen Kollimator 10, um die Bildvorlage möglichst parallel zu durchstrahlen. Auf der der Lichtquelle 2 gegenüberliegenden Seite der Bildvorlage ist eine weitere Abbildungsoptik 11 angeordnet, die die Bildvorlage durchstrahlende Strahlung 8 auf einen Vorfeldsensor 12 und einen Hauptsensor 13 abbildet. Der Datenausgang des Vorfeldsensors 12 ist über einen Datenbus 14 mit den Dateneingängen einer Steuerelektronik 15 verbunden. Der Datenausgang des Hauptsensors 13 ist mit den Dateneingängen eines Speichers 16 über einen Datenbus 17 verbunden. Die Steuerelektronik 15 ist mit ihren Steuerausgängen über eine Verbindung 18 mit den Steuereingängen des Hauptsensors 13 und über eine Verbindung 19 mit den Steuereingängen und Dateneingängen des Speichers 16 verbunden.

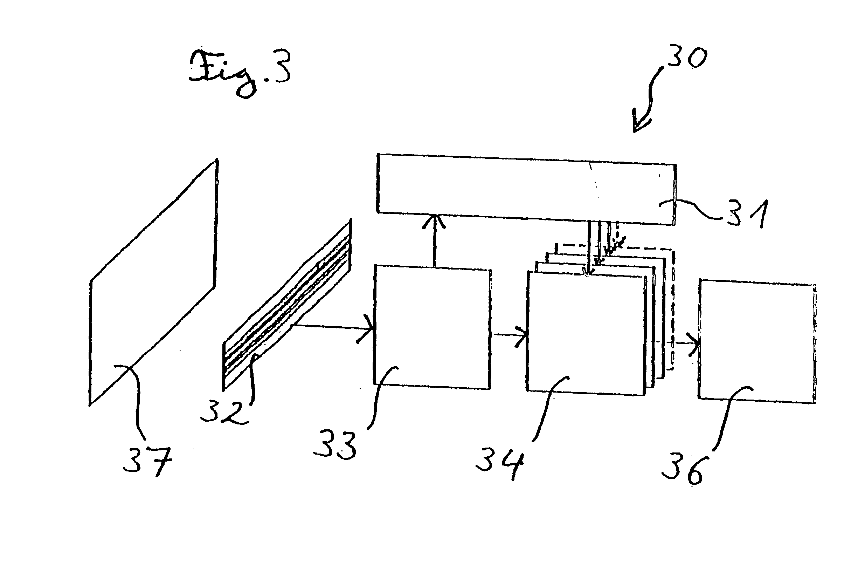

Nachfolgend wird das Verfahren zur optimalen Einstellung der geometrischen Auflösung näher erläutert. In einem ersten Verfahrensschritt wird die Auflösung der Bildvorlage durch den Vorfeldsensor 12 erfaßt. Dazu wird z.B. die Autokorrelationsfunktion der Grauwerte oder die spektrale Verteilung mit Grenzwertbestimmung der Raumfrequenz erfaßt und über die Steuerelektronik 15 eine Anpassung der Auflösung des Hauptsensors 13 vorgenommen. Dabei wird die Auflösung des Hauptsensors 13 gerade so gewählt, daß das Abtasttheorem gerade noch eingehalten wird. Da die Auflösung eines Films ein über den ganzen Fim nahezu konstanter Parameter sein kann, kann dieser Verfahrenschritt im Vorfeld der Archivierung durchgeführt werden und braucht nicht für jede Bildvorlage separat ermittelt werden. Die Anpassung der Auflösung des Vofeldsensors 12 und des Hauptsensors 13 ist auf verschiedene Arten realisierbar. Bei der Verwendung z.B. einer CCD-Matrix oder einer CCD-Zeile als Vorfeldsensor 12 und Hauptsensor 13 werden benachbarte CCD-Elemente zu Makropixelformaten zusammengefaßt, so daß die erreichbare Auflösung entsprechend angepaßt werden kann. Da die zur Verfügung stehenden CCD-Bauelemente eine um ein Vielfaches höhere Auflösung als die zu archivierenden Bildvorlagen aufweisen, kann auch bei einer diskreten Zusammenfassung benachbarter CCD-Elemente eine ausreichend genaue Einstellung der Auflösung erreicht werden. Die zwischen der Lichtquelle 2 und dem Vorfeldsensor 12 bzw. dem Hauptsensor 13 angeordnete Abbildungsoptik 3 ist bei der Anpassung der Auflösung mitzuberücksichtigen. Weiter erfaßt der Vorfeldsensor 12 die geometrische Lage und die geometrischen Abmessungen der Bildvorlage, sowie gegebenenfalls weitere Zusatzinformationen der Bildvorlage wie z.B. deren radiometrische Verteilung, was nachfolgend noch näher erläutert wird. Wird nun die Bildvorlage durch die Transportrollen 4 weiterbewegt, so wird die zuvor vom Vorfeldsensor 12 erfaßte Bildvorlage nunmehr auf den Hauptsensor 13 abgebildet. Dieser tastet dann die Bildvorlage mit der vom Vorfeldsensor 12 ermittelten Auflösung Bildpunkt für Bildpunkt ab. Die vom Vorfeldsensor 12 bzw. Hauptsensor 13 erfaßten Daten werden dann über die Steuerelektronik 15 bzw. direkt über den Datenbus 17 an den Speicher 16 übergeben. Die Datenkompression kann dann in einem separaten Verfahrenschritt erfolgen, indem die digitalisierten Daten vom Speicher 16 ausgelesen werden und mittels bekannter Datenkompressionsalgorithmen auf einer EDV-Anlage komprimiert und auf einen Massen-Datenspeicher übertragen werden. Ebenso kann die Komprimierung vor der Ablegung im Speicher 16 erfolgen, so daß dieser separate Verfahrensschritt entfällt, was später an Fig. 3 näher erlautert wird.

Zur radiometrischen Abtastung eines Filmes 7 wird vor dessen Einlegen die Vorrichtung 1 justiert. Dazu wird die Lichtquelle 2 eingeschaltet und der Vorfeldsensor 12 und der Hauptsensor 13 mit einer bestimmten Verstärkung angesteuert, wobei die Ansteuerung des Vorfeldsensors 12 nicht dargestellt ist. Die Strahlungsleistung der Lichtquelle 2 und/oder die Verstärkung des Vor-feldsensors 12 und des Hauptsensors 13 werden dann so eingestellt, daß der Hauptsensor 13 und der Vorfeldsensor 12 noch knapp unterhalb der Vollaus-steuerung angesteuert werden. Dies dient dazu, später den vollen Dynamik-bereich des Hauptsensors 13 und des Vorfeldsensors 12 auszunutzen. Nach der Justierung wird die Strahlungsleistung der Lichtquelle 2 konstant gehalten.

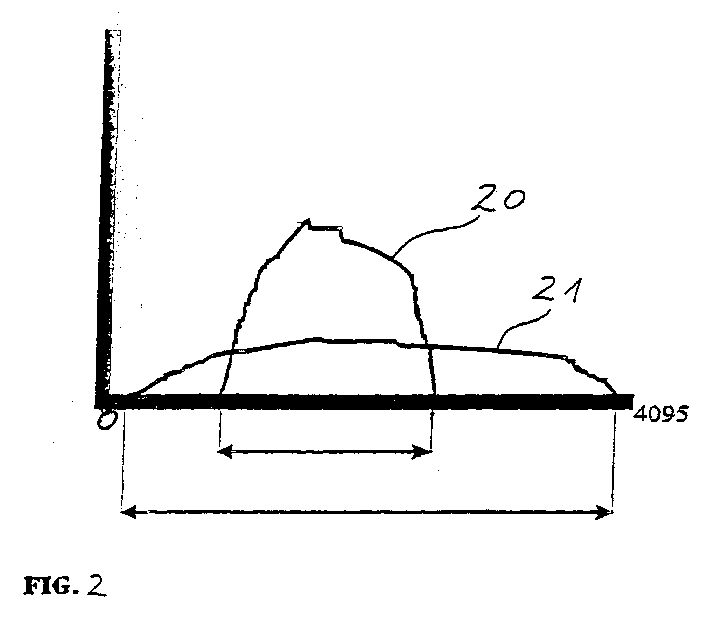

Anschließend wird der Film 7 in die Vorrichtung 1 eingelegt und soweit vorge-spult, bis das erste Bild zwischen den Führungen 5 anliegt. Die Bildvorlage wird von der Strahlung 8 der Lichtquelle 2 durchstrahlt, wobei der Transmissionsgrad von Bildpunkt zu Bildpunkt variieren kann. Die transmittierte Strahlung 8 wird von der Abbildungsoptik 11 auf den Vorfeldsensor 12 abgebildet. Der Vorfeldsensor 12 scannt die Bildvorlage Bildpunkt zu Bildpunkt ab und erfaßt den jeweiligen radiometrischen Wert eines Bildpunktes. Die Realisierung des Abscannvorganges ist auf vielerlei Arten möglich. Zum einen kann der Vorfeldsensor 12 als matrixförmiges Photosensor-Array (z.B. CCD-Array) ausgebildet sein, auf das die Bildvorlagevollständig abgebildet wird. Zum anderen ist es auch möglich, durch eine Bewegung der Abbildungsoptik 11 und/oder des Vorfeldsensors 12 einen Abscanneffekt zu realisieren. Dies ist z.B. bei Verwendung eines zeilenförmigen Photosensors notwendig. Nach der Abtastung ist somit die radiometrische Verteilung der Bildvorlage bekannt. Die vom Vorfeldsensor 12 erfaßten radiometrischen Werte werden über den Datenbus 14 an die Steuerelektronik 15 übergeben. Anhand der erfaßten Minimal- und Maximalwerte wird die Integrationszeit und/oder die Verstärkung des Hauptsensors 13 von der Steuerelektonik 15 derart ausgewählt bzw. errechnet, daß der volle Dynamikbereich des Hauptsensors 13 ausgenutzt wird. Die Verstärkung des Hauptsensor 13 muß dabei allerdings auch so gewählt werden, daß ein in der Steuerelektronik 15 integrierter AD-Wandler nicht in die Sättigung gerät. Zur Ausnutzung des vollen Dynamikbereiches des Hauptsensors 13 werden die minimalen radiometrischen Werte zum Dunkelstromrauschen und die maximalen radiometrischen Werte in Richtung zur Vollaussteuerung verschoben. Der Hauptsensor 13 scannt dann die Bildvorlage erneut ab und übergibt die erfaßten Werte über den Datenbus 17 an den Speicher 16. Über die Verbindung 19 wird die jeweilige Adresse an den Speicher 16 übergeben, sowie die Werte für die dabei verwendete Integrationszeit und/oder Verstärkung und minimaler und maximaler erfaßter radiometrischer Wert des Vorfeldsensors 12. Bei Bedarf kann dann von den abgespeicherten radiometrischen Werten wieder auf die ursprünglich von Vorfeldsensor 12 erfaßten radiometrischen Werte zurückgerechnet oder diese geeignet manipuliert werden, so daß in der Bildvorlage versteckte radiometrische Informationen auswertbar sind. Des weiteren kann die aufgenommene radiometrische Verteilung auch komprimiert werden, was anhand des Beispieles in der Fig.2 näher erläutert werden soll. In der Figur 2 sind die radiometrischen Werte in Histogrammform graphisch dargestellt. Auf der X-Achse sind die radiometrischen Werte bei z.B. 12-Bit-Auflösung und auf der Y-Achse die Anzahl der erfaßten Bildpunkte mit einem bestimmten radiometrischen Wert aufgetragen. Die Kurve 20 stellt dabei die vom Vorfeldsensor 12 erfaßte radiometrische Verteilung der Bildvorlage dar, wohingegen die Kurve 21 die vom Hauptsensor 13 erfaßte verschobene radiometrische Verteilung darstellt. Der eigentliche Informationsgehalt der radiometrischen Verteilung gemäß Kurve 20 umfaßt z.B. nur 2⁷ unterschiedliche radiometrische Werte, falls keine verdeckten Informationen durch die Streckung aufgefunden wurden. Daher kann die radiometrische Verteilung gemäß Kurve 20 auch als 7-Bit-Datum abgespeichert werden, wobei jedoch die Verschiebung zum Koordinatenursprung als Parameter mitgeführt werden muß, um später wieder auf die tatsächliche Verteilung zurückschließen zu können. Insbesondere bei Bildvorlagen mit einer schmalbandigen radiometrischen Verteilung, wie beispielsweise einer Nachtaufnahme, sind dadurch erhebliche Datenreduktionen möglich.

Der Vorfeldsensor 12 und der Hauptsensor 13 können sowohl parallel als auch seriell arbeiten. Unter parallel ist zu verstehen, daß der Vorfeldsensor 12 so angeordnet oder angesteuert wird, daß dieser immer schon das nächste Bild abtastet, während der Hauptsensor 13 die neue radiometrische Verteilung des vorangegangenen Bildes berücksichtigt. Erfaßt der Vorfeldsensor 12 eine radiometrische Verteilung, die bereits dessen ganzen Dynamikbereich aussteuert, so werden Intergrationszeit und Verstärkung für den Hauptsensor 13 nicht geändert. Zur vollen Ausnutzung des Dynamikbereiches ist zu gewährleisten, daß das Rauschen die kleinste Dynamisierungsstufe des jeweils verwendeten Dynamikbereiches nicht überschreitet. Weiter ist zu beachten, daß die meisten verwendbaren photosensitiven Bauelemente wie z.B. CCD-Arrays temperaturabhängig in ihrer Empfindlichkeit und ihres Rauschverhaltens sind. Daher ist es vorteilhaft eine Temperaturstabilisierung für den Vorfeldsensor 12 und den Hauptsensor 13 vorzusehen. Des weiteren ist anzumerken, daß mehrere der Vorrichtungen parallel angeordnet werden können, um so die erreichbare Verarbeitungszeit weiter zu erhöhen.

In der Fig.3 ist eine Vorrichtung 30 zur Korrektur von Fehlstellen dargestellt. Die Vorrichtung 30 ist üblicherweise Bestandteil der Vorrichtung 1, wird hier aber aus Gründen der Übersichtlichkeit getrennt dargestellt, wobei auch den einzelnen Bestandteilen neue Bezugszeichen zugeordnet sind. In der Fig.2 würde die Vorrichtung im wesentlichen an der Stelle des Speichers 16 angeordnet sein.

Die Vorrichtung 30 umfaßt ein spektral- und photosensitives Bauelement 32, eine Signalelektronik 33, einen Zwischenspeicher 34, einen Signalprozessor 35 und einen Massen-Datenspeicher 36. Eine abzuspeichernde Bildvorlage 37 wird z.B. von einer nichtdargestellten Lichtquelle durchstrahlt. Die die Bildvorlage 37 transmittierende Strahlung wird vom spektral- und photosensitiven Bauelement 32 detektiert. Das spektral- und photosensitive Bauelement 32 ist z.B. als zeilenförmiges RGB (Rot-Grün-Blau)-CCD-Element ausgebildet, das die Bildvorlage 37 zeilenförmig abtastet. Die erfaßten Daten werden von der Signalelektronik 33 ausgelesen, verstärkt und digitalisiert. Die digitalisierten Daten der Bildvorlage 37 werden anschließend einem jeweiligen Bildpunkt eineindeutig zuordenbar im Zwischenspeicher 34 abgelegt. Gleichzeitig übergibt die Signalelektonik 33 die digitalisierten Daten an den Signalprozessor 35. Im Signalprozessor 35 werden die Daten auf mechanische Fehler wie z.B. Risse, Streifen in Filmlaufrichtung (Scratches), Brüche in der Zelluloid-Schicht mittels eines elektronischen Filteralgorithmus, der nach dem Prinzip der Kantenerkennung arbeitet, untersucht. Wird ein solcher mechanischer Fehler festgestellt, so manipuliert der Signalprozessor 35 entsprechend die zugehörigen Daten in Zwischenspeicher 34. Zusätzlich werden die Daten im Signalprozessor 35 auf weitere Fehlstellen untersucht. Dazu wird z.B. die Fehlstelle mit benachbarten Bildpunkten verglichen. Bewirkt die Fehlstelle z.B. einen schwarzen Punkt in einem ansonsten blauen Himmel in der Bildvorlage 37, so kann die Fehlstelle durch einen benachbarten Bildpunkt oder deren Mittelung ergänzt werden. Alternativ oder kumulativ kann die zu bearbeitende Bildvorlage 37 mit einer vorangegangenen und einer nachfolgenden Bildvorlage 37 verglichen werden. Weiter können im Signalprozessor 35 radiometrische und spektrale Korrekturkurven abgelegt sein, mit denen dann die Daten im Zwischenspeicher 34 nachgeführt werden. Da die spektrale und radiometrische Veränderungen der Bildvorlage 37 aufgrund von Alterungsprozessen oder ähnlichen für einen Zelluloid-Film über den ganzen Film nahezu konstant sind, können die Korrekturkurven zu Anfang der Abtastung einmalig ermittelt werden. Die letztendlich im Zwischenspeicher 34 abgelegten Daten werden anschließend herkömmlich komprimiert und in dem Massen-Datenspeicher 36 abgelegt.

## Patentansprüche

1. Verfahren zur Archivierung von Bildvorlagen, insbesondere von Filmen, bei dem die Bildvorlage mittels einer optischen Vorrichtung mit einem photosensitiven Bauelement abgetastet wird und die erfaßten Bildpunktwerte digitalisiert, komprimiert und abgespeichert werden,
**dadurch gekennzeichnet, daß**
die geometrische und radiometrische Auflösung der jeweiligen Bildvorlage vorab bestimmt oder erfaßt wird und anschließend die Auflösung der Vorrichtung (1) adaptiv an die vorab bestimmte oder erfaßte geometrische und radiometrische Auflösung der Bildvorlage derart angepaßt wird, daß diese mit minimaler Auflösung das jeweilige Abtasttheorem einhält, wobei die adaptive Anpassung der geometrischen Auflösung der optischen Vorrichtung (1) durch Makropixelbildung des photosensitiven Bauelementes vorgenommen wird.

2. Verfahren nach Anspruch 1, **dadurch gekennzeichnet, daß** zusätzlich eine Anpassung der geometrischen Auflösung durch eine Defokussierung vorgenommen wird.

3. Verfahren nach Anspruch 1 oder 2, **dadurch gekennzeichnet, daß** zur Vorabbestimmung der maximalen geometrischen Auflösung der Bildvorlage die Autokorrelationsfunktion der Grauwerte und/oder die spektrale Verteilung mit Grenzwertbestimmung der Raumfrequenz erfaßt wird.

4. Verfahren nach einem der Ansprüche 1 bis 3, **dadurch gekennzeichnet, daß** die adaptive Anpassung der radiometrischen Auflösung der optischen Vorrichtung (1) durch die Verstärkung des photosensitiven Bauelementes und/oder die Integrationszeit und/oder die Bestrahlungsstärke vorgenommen wird.

5. Verfahren nach einem der vorangegangenen Ansprüche, **dadurch gekennzeichnet, daß** die spektrale Auflösung der jeweiligen Bildvorlage, vorab bestimmt oder erfaßt wird und anschließend die Auflösung der optischen Vorrichtung (1) adaptiv an die vorab bestimmte oder erfaßte Auflösung der Bildvorlage derart angepaßt wird, daß diese jeweils mit minimaler Auflösung das Abtasttheorem einhält.

6. Verfahren nach Anspruch 5, **dadurch gekennzeichnet, daß** die adaptive Anpassung der spektralen Auflösung der optischen Vorrichtung (1) durch die Verstellung der spektralen Empfindlichkeit des photosensitiven Bauelementes und/oder eine Änderung der spektralen Beleuchtungsstärke der Strahlungsquelle vorgenommen wird.

7. Verfahren nach einem der Ansprüche 1 bis 6, **dadurch gekennzeichnet, daß** zusätzliche geometrische und/oder radiometrische und/oder spektrale Parameter der Bildvorlage, insbesondere Abmessungen, Positionen, Dynamikbereich der radiometrischen Auflösung und Alterungserscheinungen, vorab erfaßt oder bestimmt werden und bei der Abtastung und/oder Digitalisierung und/oder Komprimierung der Daten berücksichtigt werden.

8. Verfahren nach einem der vorangegangenen Ansprüche, **dadurch gekennzeichnet, daß** das photosensitive Bauelement vorab über seine geometrischen und spektralen Eigenschaften vermessen wird und Korrekturkurven ermittelt werden, mittels deren die Bilddaten korrigiert werden.

9. Verfahren nach einem der Ansprüche 1 bis 8, **dadurch gekennzeichnet, daß** nach der Digitalisierung der Bildvorlage mechanische Fehler und/oder andere Fehlstellen der Bildvorlage erfaßt und mittels benachbarter Bildpunkte und/oder vorangegangener und/oder nachfolgender Bildvorlagen korrigiert oder ignoriert werden.

10. Verfahren nach Anspruch 9, **dadurch gekennzeichnet, daß** mittels Abweichungen der Point-Spread-Funktion gegenüber der übrigen Bildvorlage eine Kantenerkennung der mechanischen Fehler der Bildvorlage und/oder einer Tonspur einer Filmvorlage erkannt wird.

11. Verfahren nach einem der vorangegangenen Ansprüche, **dadurch gekennzeichnet, daß** die erfaßten Bildpunkte mittels Korrekturkurven spektral und radiometrisch vor der Datenkomprimierung nachgeführt werden, wobei die Korrekturkurven insbesondere Materialparameter und Alterungsprozesse der Bildvorlage kompensieren und/oder Unschärfen der Bildvorlage durch eine Korrektur der Point-Spread-Funktion vorgenommen werden.

12. Verfahren nach einem der vorangegangenen Ansprüche, **dadurch gekennzeichnet, daß** die während der Abtastung erfaßten Bildzusatzinformationen und die zur adaptiven Anpassung der optischen Vorrichtung (1) eingestellten Parameter zwischengespeichert und beim Einschreiben der Daten in einen Massenspeicher in Form eines Datenheaders mitgeführt werden.

13. Vorrichtung zur Archivierung von Bildvorlagen, umfassend eine Transportvorrichtung für die Bildvorlage, eine Strahlungsquelle, eine optische Vorrichtung zur Abtastung der Bildvorlage, eine Steuerelektronik zur Digitalisierung der erfaßten Bildpunkte der Bildvorlage, eine Einrichtung zur Komprimierung der digitalisierten Daten und einen Massenspeicher,
**dadurch gekennzeichnet, daß**
der Vorrichtung (1) ein Vorfeld-Sensor (12) zur Vorabbestimmung der maximalen geometrischen und radiometrischen Auflösung der Bildvorlage zugeordnet ist, dessen jeweilige Auflösung ein Vielfaches der maximal auftretbaren Auflösung der Bildvorlage beträgt und die Auflösung eines der optischen Vorrichtung (1) zugeordneten Hauptsensors (13) über die Steuerelektronik (15) derart veränderbar ist, daß die jeweilige Bildvorlage mit einer mindestens zweifach höheren Auflösung als die maximal auftretende geometrische und radiometrische Auflösung der Bildvorlage abtastbar ist, wobei die adaptive Anpassung der geometrischen Auflösung der optischen Vorrichtung durch Makropixelbildung des Hauptsensors (13) erfolgt.

14. Vorrichtung nach Anspruch 13, **dadurch gekennzeichnet, daß** die optische Vorrichtung zur Anpassung der geometrischen Anpassung defokussierbar ist.

15. Vorrichtung nach einem der Ansprüche 13 oder 14, **dadurch gekennzeichnet, daß** zur Vorabbestimmung der maximalen geometrischen Auflösung der Bildvorlage die Autokorellationsfunktion der Grauwerte und/oder die spektrale Verteilung mit Grenzwertbestimmung der Raumfrequenz erfaßbar ist.

16. Vorrichtung nach einem der Ansprüche 13 bis 15, **dadurch gekennzeichnet, daß** die Verstärkung des photosensitiven Bauelementes und/oder die Intergrationszeit und/oder die Bestrahlungsstärke zur adaptiven Anpassung der radiometrischen Auflösung veränderbar sind.

17. Vorrichtung nach einem der Ansprüche 13 bis 16, **dadurch gekennzeichnet, daß** die spektrale Auflösung der jeweiligen Bildvorlage vorab bestimmbar oder erfaßbar ist, wobei die Auflösung der optischen Vorrichtung (1) adaptiv an die vorab bestimmte oder erfaßte Auflösung der Bildvorlage anpaßbar ist, daß diese jeweils mit minimaler Auflösung das Abtasttheorem einhält.

18. Vorrichtung nach Anspruch 17, **dadurch gekennzeichnet, daß** die spektrale Empfindlichkeit des photosensitiven Bauelementes und/oder die spektrale Beleuchtungsstärke der Strahlungsquelle zur Anpassung der spektralen Auflösung der optischen Vorrichtung veränderbar ist.

## Claims

1. Method for archiving master images, especially of films, in which the master image is scanned by means of an optical device with a photosensitive component and the detected image point values are digitised, compressed and stored,
**characterised in that**
the geometric and radiometric resolution of the respective master image is determined or detected in advance and then the resolution of the device (1) is adaptively matched to the previously determined or detected geometric and radiometric resolution of the master image in such a way that the latter conforms to the respective scanning theorem with minimum resolution, the adaptive matching of the geometric resolution of the optical device (1) being carried out by macropixel formation of the photosensitive component.

2. Method according to claim 1, **characterised in that** in addition, matching of the geometric resolution is carried out by defocusing.

3. Method according to claim 1 or 2, **characterised in that,** to predetermine the maximum geometric resolution of the master image, the autocorrelation function of the grey values and/or the spectral distribution of the spatial frequency with determination of the limit values is detected.

4. Method according to one of claims 1 to 3, **characterised in that** the adaptive matching of the radiometric resolution of the optical device (1) is carried out by amplification of the photosensitive component and/or the integration time and/or the irradiation intensity.

5. Method according to one of the preceding claims, **characterised in that** the spectral resolution of the respective master image is determined or detected in advance and then the resolution of the optical device (1) is adaptively matched to the previously determined or detected resolution of the master image in such a way that the latter conforms to the scanning theorem with minimum resolution.

6. Method according to claim 5, **characterised in that** the adaptive matching of the spectral resolution of the optical device (1) is carried out by adjusting the spectral sensitivity of the photosensitive component and/or altering the spectral luminous intensity of the radiation source.

7. Method according to one of claims 1 to 6, **characterised in that** additional geometric and/or radiometric and/or spectral parameters of the master image, especially dimensions, positions, dynamic range of the radiometric resolution and ageing phenomena are detected or determined in advance and taken into account in the scanning and/or digitisation and/or compression of the data.

8. Method according to one of the preceding claims, **characterised in that** the photosensitive component is measured in advance via its geometric and spectral properties and correction curves are determined by means of which the image data are corrected.

9. Method according to one of claims 1 to 8, **characterised in that** after digitisation of the master image, mechanical faults and/or other defects of the master image are detected and are corrected or ignored by means of adjacent image points and/or preceding and/or subsequent master images.

10. Method according to claim 9, **characterised in that** an edge of the mechanical fault in the master image and/or of a sound track of a master film is detected by means of deviations of the point spread function by comparison with the remaining master image.

11. Method according to one of the preceding claims, **characterised in that** the detected image points are plotted spectrally and radiometrically before the data compression, the correction curves compensating in particular for material parameters and ageing processes and/or fuzziness of the master image being counteracted by correction of the point spread function.

12. Method according to one of the preceding claims, **characterised in that** the additional image information detected during the scanning and the. parameters set for the adaptive matching of the optical device (1) are temporarily stored and also included when the data are written into a mass memory in the form of a data header.

13. Device for archiving master images, comprising a transport device for the master image, a radiation source, an optical device for scanning the master image, control electronics for digitising the detected points of the master image, a device for compressing the digitised data and a mass memory, **characterised in that**
there is associated with the device (1) a pre-field sensor (12) for prior determination of the maximum geometric and radiometric resolution of the master image, the respective resolution of said sensor being a multiple of the maximum occurring resolution of the master image, and the resolution of a main sensor (13) associated with the optical device (1) is capable of being altered via the control electronics (15) in such a way that the respective master image can be scanned at a resolution which is at least twice as high as the maximum occurring geometric and radiometric resolution of the master image, the adaptive matching of the geometric resolution of the optical device taking place by macropixel formation of the main sensor (13).

14. Device according to claim 13, **characterised in that** the optical device can be defocused for adapting the geometric matching.

15. Device according to one of claims 13 or 14, **characterised in that,** for prior determination of the maximum geometric resolution of the master image, the autocorrelation function of the grey values and/or the spectral distribution of the spatial frequency with determination of the limit values can be detected.

16. Device according to one of claims 13 to 15, **characterised in that** the amplification of the photosensitive component and/or the integration time and/or the irradiation intensity can be altered for the adaptive matching of the radiometric resolution.

17. Device according to one of claims 13 to 16, **characterised in that** the spectral resolution of the respective master image can be determined or detected in advance, the resolution of the optical device (1) being capable of being adaptively matched to the previously determined or detected resolution of the master image, such that in each case the latter conforms to the scanning theorem with minimum resolution.

18. Device according to claim 17, **characterised in that** the spectral sensitivity of the photosensitive component and/or the spectral luminous intensity of the radiation source can be altered for adapting the spectral resolution of the optical device.

## Revendications

1. Procédé pour l'archivage de modèles d'image, en particulier de films, au niveau duquel le modèle d'image est balayé au moyen d'un dispositif optique avec un composant photosensible et les valeurs saisies des points d'image sont numérisées, compressées et enregistrées, **caractérisé en ce que** la résolution géométrique et radiométrique de chaque modèle d'image est pré-définie ou saisie et qu'ensuite, la résolution du dispositif (1) est ajustée, de manière adaptative, à la résolution géométrique et radiométrique pré-définie ou saisie du modèle d'image, et ce, de telle sorte que celle comportant la résolution minimale contient le théorème d'échantillonnage respectif, l'ajustement adaptatif de la résolution géométrique du dispositif optique (1) étant réalisé de par la formation de macro-pixels du composant photosensible.

2. Procédé selon la revendication 1, **caractérisé en ce qu'**un ajustement de la résolution géométrique est en outre réalisé par une défocalisation.

3. Procédé selon la revendication 1 ou 2, **caractérisé en ce que** la fonction d'autocorrélation des valeurs de gris et/ou la répartition spectrale sont saisies avec la détermination de la valeur limite de la fréquence spatiale pour prédéfinir la résolution géométrique maximale du modèle d'image.

4. Procédé selon l'une des revendications 1 à 3, **caractérisé en ce que** l'ajustement adaptatif de la résolution radiométrique du dispositif optique (1) s'effectue par l'amplification du composant photosensible et/ou le temps d'intégration et/ou l'éclairement énergétique.

5. Procédé selon l'une quelconque des revendications précédentes, **caractérisé en ce que** la résolution spectrale de chaque modèle d'image est pré-définie ou saisie et qu'ensuite, la résolution du dispositif optique (1) est ajustée, de manière adaptative, à la résolution pré-définie ou saisie du modèle d'image, et ce, de telle sorte que celle comportant à chaque fois la résolution minimale contient le théorème d'échantillonnage.

6. Procédé selon la revendication 5, **caractérisé en ce que** l'ajustement adaptatif de la résolution spectrale du dispositif optique (1) est réalisé par le réglage de la sensibilité spectrale du composant photosensible et/ou une modification de l'intensité lumineuse spectrale de la source du rayonnement.

7. Procédé selon l'une des revendications 1 à 6, **caractérisé en ce que** des paramètres supplémentaires géométriques et/ou radiométriques et/ou spectraux du modèle d'image, en particulier, des dimensions, des positions, la gamme dynamique de la résolution radiométrique et des signes de vieillissement, sont pré-saisis ou définis et pris en compte à l'occasion du balayage et/ou de la numérisation et/ou de la compression des données.

8. Procédé selon l'une quelconque des revendications précédentes, **caractérisé en ce que** les caractéristiques spectrales et géométriques du composant photosensible font l'objet de mesures préalables, et que des courbes d'erreurs, permettant de corriger les données de l'image, sont déterminées.

9. Procédé selon l'une des revendications 1 à 8, **caractérisé en ce qu'**après la numérisation du modèle d'image, des erreurs, d'ordre mécanique, et/ou d'autres défauts du modèle d'image sont saisis et corrigés à l'aide de points d'image voisins et/ou de modèles d'image précédents et/ou suivants ou sont ignorés.

10. Procédé selon la revendication 9, **caractérisé en ce qu'**une détection des limites des erreurs, d'ordre mécanique, du modèle d'image et/ou d'une piste sonore d'un modèle de film est identifiée au moyen des écarts de la fonction d'étalement des points par rapport au modèle d'image restant.

11. Procédé selon l'une quelconque des revendications précédentes, **caractérisé en ce que** les points d'image saisis sont spectralement et radiométriquement suivis au moyen de courbes d'erreurs avant la compression des données, lesdites courbes compensant notamment des paramètres de matériels et des processus de vieillissement du modèle d'image et/ou les manques de netteté du modèle d'image étant corrigés par la fonction d'étalement des points.

12. Procédé selon l'une quelconque des revendications précédentes, **caractérisé en ce que** les informations supplémentaires concernant l'image, saisies lors du balayage, et les paramètres réglés pour l'ajustement adaptatif du dispositif optique (1) sont mémorisées temporairement et sont conduits, à l'occasion de l'écriture des données, dans une mémoire de masse sous forme d'un titre de données.

13. Dispositif pour l'archivage de modèles d'image comprenant un dispositif d'acheminement pour le modèle d'image, une source de rayonnement, un dispositif optique pour balayer le modèle d'image, une électronique de commande pour numériser les points d'image saisis du modèle d'image, un dispositif pour compresser les données numérisées et une mémoire de masse, **caractérisé en ce qu'**un capteur en amont (12), dont la résolution respective est un multiple de la résolution maximale susceptible d'apparaître du modèle d'image, est associé au dispositif (1) pour prédéfinir la résolution maximale géométrique et radiométrique du modèle d'image, et **en ce que** la résolution d'un capteur principal (13) associé au dispositif optique (1) peut être modifiée par l'électronique de commande (15) de telle sorte que chaque modèle d'image peut être balayé avec une résolution au moins deux fois supérieure à la résolution maximale géométrique et radiométrique apparaissant du modèle d'image, l'ajustement adaptatif de la résolution géométrique du dispositif optique étant réalisé de par la formation de macro-pixels du capteur principal (13).

14. Dispositif selon la revendication 13, **caractérisé en ce que** le dispositif optique peut être défocalisé pour le réglage de l'ajustement géométrique.

15. Dispositif selon l'une des revendications 13 ou 14, **caractérisé en ce que** la fonction d'autocorrélation des valeur de gris et/ou la répartition spectrale peuvent être saisies avec la détermination de la valeur limite de la fréquence spatiale pour prédéfinir la résolution géométrique maximale du modèle d'image.

16. Dispositif selon l'une des revendications 13 à 15, **caractérisé en ce que** l'amplification du composant photosensible et/ou le temps d'intégration et/ou l'éclairement énergétique peuvent être modifiés pour l'ajustement adaptatif de la résolution radiométrique.

17. Dispositif selon l'une des revendications 13 à 16, **caractérisé en ce que** la résolution spectrale de chaque modèle d'image peut être pré-définie ou saisie, la résolution du dispositif optique (1) pouvant être ajusté de façon adaptative à la résolution pré-définie ou saisie du modèle d'image et **en ce que** celle comportant à chaque fois la résolution minimale contient le théorème d'échantillonnage.

18. Dispositif selon la revendication 17, **caractérisé en ce que** la sensibilité spectrale du composant photosensible et/ou l'intensité lumineuse spectrale de la source du rayonnement peuvent être modifiées pour ajuster la résolution spectrale du dispositif optique.
